# EUROPÄISCHE PATENTSCHRIFT

(11) **EP 3 561 345 B1**
(45) Veröffentlichungstag und Bekanntmachung des Hinweises auf die Patenterteilung: **16.12.2020**
(21) Anmeldenummer: 18465517.3
(22) Anmeldetag: 24.04.2018
(51) Int. Cl.: F16K 5/06, F16K 11/087, F01P 7/14, F16J 15/10, F16J 15/02, F16K 5/20

(54) **DICHTUNG UND FLUIDVENTIL**
SEAL AND FLUID VALVE
JOINT D'ÉTANCHÉITÉ ET SOUPAPE

(43) Veröffentlichungstag der Anmeldung: 30.10.2019
(73) Patentinhaber: Vitesco Technologies GmbH, 30165 Hannover (DE)
(72) Erfinder: Popa, Alexandru, 240048 Rimnicu Vilcea (RO); Plaeru, George, 300620 Timisoara (RO); Rozputniak, Dmytro, 330059 Deva (RO)

(56) Entgegenhaltungen:
- WO-A1-84/04794
- DE-A1- 2 150 628
- FR-A1- 2 993 030
- US-A1- 2001 038 084
- US-A1- 2013 045 064

## Beschreibung

Die vorliegende Erfindung betrifft ein Fluidventil mit einer Dichtung. Unter einem Fluidventil ist dabei insbesondere ein Kühlwasserventil, insbesondere zur Verwendung in einem Fahrzeug zu verstehen. Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge. Ferner kann es sich beim Fahrzeug auch um ein teilelektrisches oder vollelektrisches Fahrzeug handeln, insbesondere aber um Personenkraftwagen und/oder Nutzfahrzeuge.

Dichtungen als solche können unterschiedliche Aufgaben haben. Sie können z.B. dem Zweck dienen, ungewollte Fluidverluste zu vermeiden oder zumindest zu begrenzen. Unter einem Fluid kann dabei ein flüssiges und/oder gasförmiges Medium verstanden werden.

Aus der Druckschrift FR 2 993 030 A1 ist ein Dichtelement bekannt, welches spiralförmige Ausnehmungen aufweist.

Ferner ist aus der DE 21 50 628 A1 ein Fluidventil in Gestalt eines Kugelhahnventils bekannt, bei dem innerhalb eines Ventilgehäuses ein verschwenkbar stellbarer Ventilkörper bzw. ein Kugelküken mit einem Dichtelement zusammenwirkt.

Aufgabe der vorliegenden Erfindung ist es, ein Fluidventil, insbesondere in Gestalt eines Kühlwasserventils bereitzustellen, welches höchsten Anforderungen an eine Langzeit-Dichtheit unter bekanntlich großen Temperaturschwankungen einer Verbrennungsmotorenperipherie und/oder einer Elektromotorenperipherie gerecht wird. Das Fluidventil soll darüber hinaus kostengünstig herstellbar sein.

Diese Aufgabe wird durch den Anspruch 1 gelöst, der ein Fluidventil unter Schutz stellt. Es wird ferner eine Verwendung des Fluidventils als Kühlwasserventil (vgl. Anspruch 14) unter Schutz stellt. Vorteilhafte Ausführungsformen der Erfindung sind Gegenstand der Unteransprüche.

Es wird ein Fluidventil vorgeschlagen, umfassend:
ein Ventilgehäuse,
einen stellbaren Ventilkörper innerhalb des Ventilgehäuses und zumindest eine elastisch verformbare Dichtung,
wobei die Dichtung
   - eine erste Stirnseite bzw. ein erstes stirnseitiges Ende zur statisch dichtenden Anlage gegen den Ventilkörper und
   - eine zweite Stirnseite bzw. ein zweites stirnseitiges Ende zur dynamisch dichtenden Anlage gegen das Ventilgehäuse aufweist.

Dabei ist/sind bezüglich einer Dichtungsöffnung innenliegend und/oder außenliegend an der Dichtung eine Vielzahl von abschnittsweise ausgebildeten, spiralförmigen Ausnehmungen ausgeformt, die sich als solche von der zweiten Stirnseite in einer Längsrichtung sowie in einer Umfangsrichtung der Dichtung erstrecken und dadurch zumindest dem der zweiten Stirnseite zugewandten Ende der Dichtung, aus dem sie entspringen, eine derartig gewünschte elastische Verformbarkeit bzw. ein derartig gewünschtes elastisches Verhalten verleihen, so dass die Dichtung durch den Ventilkörper, mit dem die Dichtung zusammen wirkt, zur Abdichtung eines Anschlussbereiches des Fluidventils elastisch verformbar ist. Die vorgeschlagenen spiralförmigen Ausnehmungen verleihen zumindest dem der zweiten Stirnseite zugewandten Ende der Dichtung die Eigenschaft eines dünnwandigen offenen und biegeweichen Profils.

Unter einer abschnittsweise "spiralförmigen" Ausnehmung ist dabei eine Ausnehmung zu verstehen, die sich als solche in der Art eines Gewindeganges einer Schraube um eine Längsachse der Dichtung erstreckt bzw. eine schraubenartige Kurve um diese Längsachse der Dichtung beschreibt. Die Querschnittsform der Ausnehmung ist dabei frei gestaltbar.

Die vorgeschlagene Dichtung verleiht selbst einem harten Kunststoff, aus dem die Dichtung gefertigt sein kann und der sich als solcher beim Zusammenwirken mit dem Ventilkörper in einem Fluidventil elastisch nicht bzw. zumindest im Wesentlichen elastisch nicht verformen lässt, eine gewünschte elastische Verformbarkeit bzw. ein gewünschtes elastisches Verhalten. Somit entfällt die Notwendigkeit, in diesem Zusammenhang entsprechend elastisch verformbare Kunststoffe mit an sich harten und in diesem Zusammenhang entsprechend elastisch nicht verformbaren Kunststoffen zu kombinieren, beispielsweise indem man einen elastisch verformbaren Kunststoff mit einem Hart-Kunststoff beschichtet. Dies vereinfacht die Herstellung einer solchen Dichtung. Bei dem harten Kunststoff kann es sich dabei z.B. um einen PTFE-Kunststoff (PTFE steht für Polytetrafluorethylen) und dergleichen mehr handeln.

Oder anders ausgedrückt, verleihen die in der Dichtung vorgeschlagenen spiralförmigen Ausnehmungen einem verwendeten, harten Kunststoff, etwa einem PTFE-Kunststoff, aus dem die Dichtung gefertigt sein kann und der als solcher kein für das Zusammenwirken mit dem Ventilkörper im Fluidventil gewünschtes elastisches Verhalten aufweist, vorteilhafterweise zwei gewünschte Eigenschaften: Eine ventilkörperseitig gewünschte Härte und Gleitfähigkeit einerseits, um mit dem Ventilkörper optimal zusammenwirken zu können, und eine insgesamt gewünschte, elastische Verformbarkeit bzw. ein insgesamt gewünschtes, elastisches Verhalten beim Zusammenwirken mit dem Ventilkörper andererseits.

Die Vielzahl der einzelnen spiralförmigen Ausnehmungen ist dabei je nach Bedarf frei festlegbar. Die einzelnen spiralförmigen Ausnehmungen können sich dabei zweckmäßigerweise in dieselbe Richtung erstrecken. Auch können die einzelnen spiralförmigen Ausnehmungen identisch ausgebildet sein. Ferner können die einzelnen spiralförmigen Ausnehmungen gleichmäßig zueinander beabstandet sein.

Nach einer Ausführungsform kann die erste Stirnseite der Dichtung gegenüber der Längsrichtung der Dichtung, korrespondierend zur Formgebung des Ventilkörpers schräg gestellt sein. Der Ventilkörper kann z.B. abschnittsweise zylinder- und/oder kugelförmig ausgeformt sein. Die erste Stirnseite kann dabei mit der Längsrichtung einen Winkel von etwa 45° bis 75° einschließen. Dies begünstigt eine Dichtwirkung der Dichtung.

Nach einer weiteren Ausführungsform können sich die einzelnen spiralförmigen Ausnehmungen bis in einen Bereich der ersten Stirnseite erstrecken. Dies begünstigt umso mehr die elastische Verformbarkeit der Dichtung. Auch können sich die einzelnen spiralförmigen Ausnehmungen von der zweiten Stirnseite bis zur ersten Stirnseite erstrecken, um die elastische Verformbarkeit der Dichtung umso mehr zu begünstigen.

Die Dichtung der zuvor beschriebenen Art dient der Abdichtung eines Anschlussbereiches des Fluidventils, insbesondere in Gestalt eines Mehrwege-Ventils.

Es wird ferner eine Verwendung eines solchen Fluidventils als Kühlwasserventil - auch Kühlwassersteuerventil oder Kühlwasserregelventil genannt -, insbesondere eines Fahrzeugs vorgeschlagen. Das Kühlwasserventil kann dabei z.B. die Funktion eines Mischventils und/oder Verteilerventils haben.

Im Weiteren wird die Erfindung unter Bezugnahme auf Figurendarstellungen im Einzelnen erläutert. Aus den Unteransprüchen und der nachfolgend detaillierten Beschreibung der vorgeschlagenen Ausführungsformen ergeben sich weitere vorteilhafte Weiterbildungen der Erfindung. Hierzu zeigen:
- Fig.1: eine erste Ausführungsform einer Dichtung eines erfindungsgemäß vorgeschlagenen Fluidventils in einer Seiten- und Vorderansicht,
- Fig.2: eine perspektivische Darstellung der in Fig.1 gezeigten Dichtung,
- Fig.3: eine weitere perspektivische Darstellung der in Fig.1 gezeigten Dichtung,
- Fig.4: eine zweite Ausführungsform einer Dichtung eines erfindungsgemäß vorgeschlagenen Fluidventils,
- Fig.5: eine Schnittdarstellung der in Fig.1 gezeigten Dichtung in einem Fluidventil und
- Fig.6: eine vergrößerte Darstellung der in Fig.5 gezeigten Anordnung.

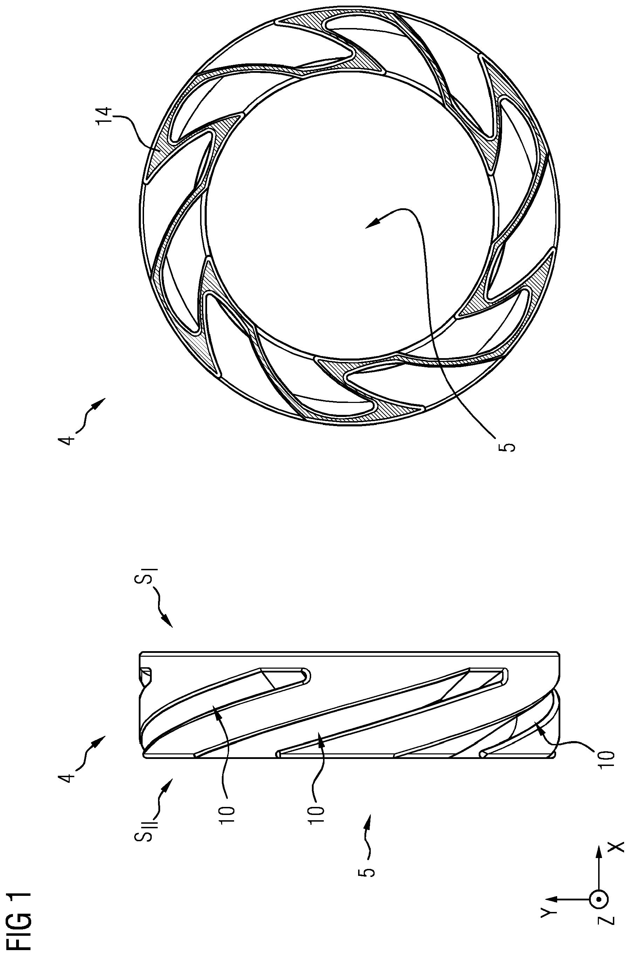

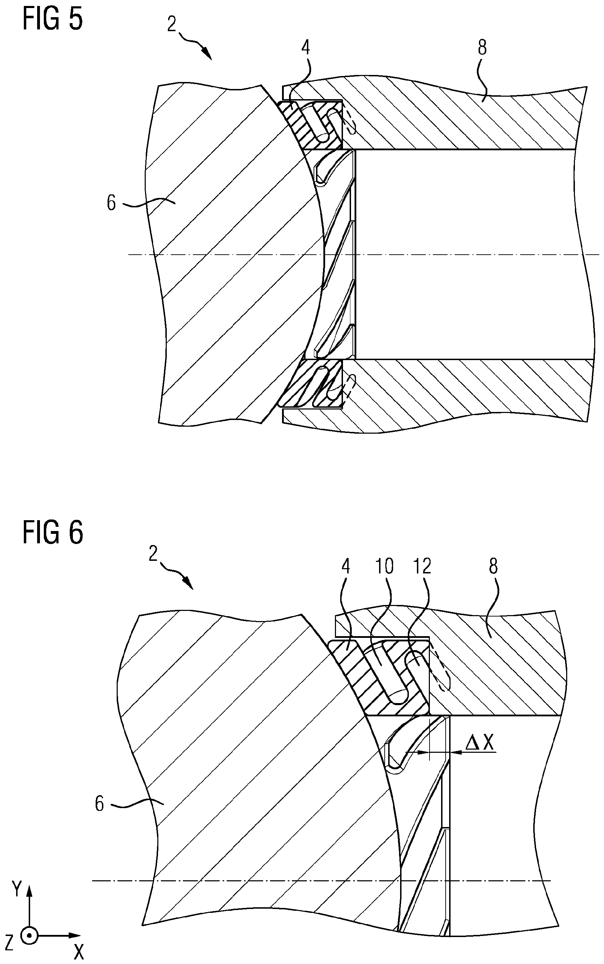

Fig.1 veranschaulicht eine aus einem Kunststoff einstückig gespritzte, elastisch verformbare, kreisringförmige Dichtung 4, die zur Verwendung in einem Fluidventil 2 - auch Fluidsteuerventil oder Fluidregelventil genannt - vorgesehen ist. Die Dichtung 2 umfasst dabei eine erste Stirnseite bzw. ein erstes stirnseitiges Ende S_{I} zur statisch dichtenden Anlage gegen einen stellbaren Ventilkörper 6 des Fluidventils 2 und eine zweite Stirnseite bzw. ein zweites stirnseitiges Ende S_{II} zur dynamisch dichtenden Anlage gegen ein Ventilgehäuse 8 des Fluidventils 2 (vgl. Fig.1 in Verbindung mit Fig.5 oder Fig.6).

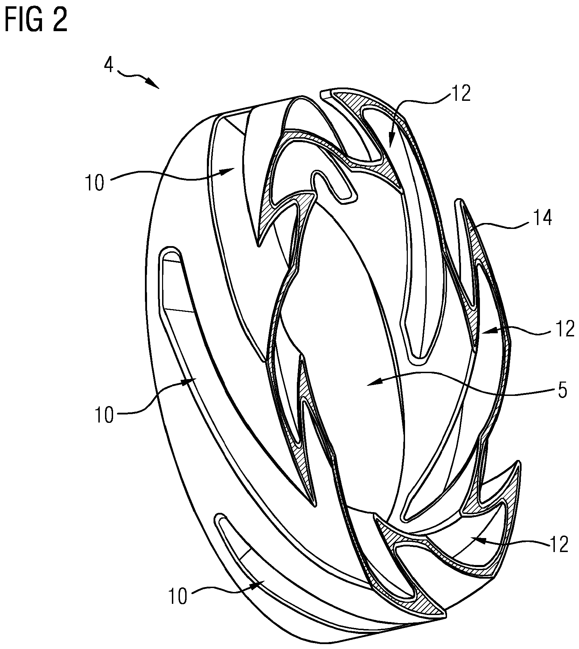

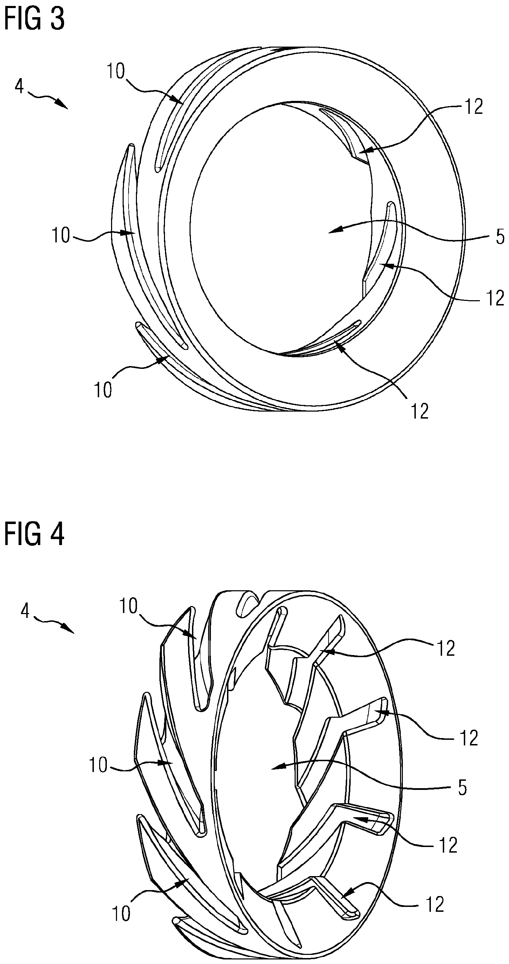

Bezüglich einer Dichtungsöffnung 5 sind dabei innenliegend und außenliegend an der Dichtung 4 jeweils eine Vielzahl von abschnittsweise ausgebildeten, spiralförmigen Ausnehmungen 10, 12 ausgeformt, die sich als solche von der zweiten Stirnseite S_{II} in einer Längsrichtung X - X sowie in einer Umfangsrichtung der Dichtung 4 bis in einen Bereich der ersten Stirnseite S_{I} erstrecken. Die einzelnen außenliegenden Ausnehmungen 10 sind dabei identisch und gleichmäßig zueinander beabstandet ausgebildet. Auch die einzelnen innenliegenden Ausnehmungen 12 sind dabei identisch und gleichmäßig zueinander beabstandet ausgebildet. In der Vorderansicht der in Fig.1 gezeigten Dichtung 4 ist zudem die durchgehend bzw. geschlossen verlaufende, ventilkörperseitige Anlage- bzw. Kontaktfläche 14 zur Anlage gegen das Ventilgehäuse 8 schraffiert hervorgehoben (siehe auch Fig.2). Nach einer alternativen Ausgestaltung der Dichtung 4 (vgl. Fig. 4) erstrecken sich die einzelnen innenliegend ausgebildeten, spiralförmigen Ausnehmungen 12 sogar von der zweiten Stirnseite S_{II} bis zur ersten Stirnseite S_{I}, so dass die Ausnehmungen 12 an der zweiten Stirnseite S_{II} abschnittweise Unterbrechungen bilden. Dennoch verbleibt auch die zweite Stirnseite S_{II} durchgehend bzw. geschlossen verlaufend, um die Abdichtung gegenüber dem Ventilkörper 6 sicherzustellen.

Die Fig.5 und Fig.6 veranschaulichen eine Anordnung der Dichtung 4 in einem Fluidventil 2, dessen stellbarer Ventilkörper einen kugelförmigen Abschnitt 6 aufweist, an dem die Dichtung 4 mit der Kontaktstelle der ersten Stirnseite S_{I} linienförmig bzw. linienartig und/oder flächenförmig bzw. flächenartig dichtwirkend anliegt. Die zweite Stirnseite S_{II} hingegen liegt mit ihrer Kontaktstelle linienförmig bzw. linienartig und/oder flächenförmig bzw. flächenartig dichtwirkend an einem Ventil-Gehäuse 8 des Fluidventils 2 an. In den Fig. 5 und Fig. 6 überschneiden sich die ventilgehäuseseitig durch die Ausnehmungen 12 gebildeten freien und biegeweichen Enden der Dichtung 4 mit dem Ventilgehäuse 8 um die veranschaulichte Länge ΔX. Um diese Länge ΔX wird die Dichtung 4 in ihrer Einbaulage elastisch zusammen gedrückt. Unter Berücksichtigung dieser elastischen Verformung ist daher die sich tatsächlich darstellende, ventilgehäuseseigte Anlage- bzw. Kontaktfläche größer als die in der Fig.1 dargestellte schraffierte Anlage- bzw. Kontaktfläche 14.

Die in den Figuren dargestellten Ausnehmungen 10, 12 verleihen den im Rahmen dieser Offenbarung vorgeschlagenen Ausführungsformen zumindest bezüglich des der zweiten Stirnseite S_{II} zugewandten Endes der Dichtung 4, aus dem die Ausnehmungen 10, 12 entspringen, eine derartig gewünschte elastische Verformbarkeit, so dass sich die Dichtung 4 beim Zusammenwirken mit dem Ventilkörper 6 zur Abdichtung des Anschlussbereiches des Fluidventils 2 elastisch verformen lässt.

Der Kunststoff kann dabei aus einem Hart-Kunststoff gespritzt sein. Unter einem Hart-Kunststoff kann dabei ein Kunststoff verstanden werden, der als solcher an der jeweils dichtenden Kontaktstelle der ersten und zweiten Stirnseite S_{I}, S_{II} linienförmig bzw. linienartig und/oder flächenförmig bzw. flächenartig dichtwirkend ist und der sich als solcher ohne die besagten spiralförmigen Ausnehmungen 10, 12 beim Zusammenwirken mit dem Ventilkörper 6 elastisch nicht oder zumindest so gut wie nicht elastisch verformen lässt. Ein solcher Kunststoff ist z.B. PTFE (PTFE steht dabei für Polytetrafluorethylen) und dergleichen mehr.

Alternativ zum vorhergehend Ausgeführten könnte die einstückig ausgebildete Dichtung 4 selbstverständlich auch aus einem weicheren Kunststoff - etwa aus einem EPDM-Kunststoff (EPDM steht dabei für Ethylen-Propylen-Dien) - gespritzt sein, der sich als solcher selbst ohne die besagten spiralförmigen Ausnehmungen 10, 12 beim Zusammenwirken mit dem Ventilkörper 6 bereits - zumindest in einem gewissen Maß - elastisch verformen lässt und der als solcher auf der zweiten Stirnseite S_{II} oder zumindest im Bereich der dichtenden Kontaktstelle der zweiten Stirnseite S_{II} mit einer Hart-Kunststoffschicht, etwa aus PTFE und/oder dergleichen mehr versehen, z.B. beschichtet ist. Diese Hart-Kunststoffschicht dichtet dabei linienförmig bzw. linienartig und/oder flächenförmig bzw. flächenartig gegenüber dem Ventilkörper 6 ab. Die Ausnehmungen 10, 12 verleihen der Dichtung 4 dabei letztlich die gewünschte elastische Verformbarkeit bzw. das gewünschte elastische Verhalten.

Grundsätzlich gilt, dass je weiter sich die einzelnen spiralförmigen Ausnehmungen 10, 12 über die Dichtung 4, d.h. in der Längs- und in der Umfangsrichtung der Dichtung 4 erstrecken, desto elastisch verformbarer stellt sich die Dichtung 4 im Ergebnis dar.

Je nachdem, auf welcher Seite der Dichtung 4 sich ein größerer fluidischer bzw. hydraulischer Druck einstellt, wirken entweder die außenliegenden Ausnehmungen 10 oder die innenliegenden Ausnehmungen 12 fluidisch bzw. hydraulisch kraftverstärkend und erhöhen dabei die Dichtwirkung an der jeweiligen Kontaktstelle der ersten oder zweiten Stirnseite S_{I}, S_{II}.

Die erste Stirnseite S_{I} ist zudem gegenüber der Längsrichtung X - X der Dichtung 4, korrespondierend zur Formgebung des kugelförmigen Ventilkörperabschnitts 6 schräg gestellt (vgl. Fig.1 in Verbindung mit z.B. Fig.5 oder Fig.6). Die erste Stirnseite S_{I} kann dabei mit der Längsrichtung X - X einen Winkel von etwa 45° bis 75° einschließen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. Fluidventil (2) umfassend:
ein Ventilgehäuse (8),
einen stellbaren Ventilkörper (6) innerhalb des Ventilgehäuses (8) und
zumindest eine elastisch verformbare Dichtung (4),
wobei die Dichtung (4) eine erste Stirnseite (S_{I}) zur dichtenden Anlage gegen den Ventilkörper (6) und
eine zweite Stirnseite (S_{II}) zur dichtenden Anlage gegen das Ventilgehäuse (8) aufweist,
**dadurch gekennzeichnet, dass**
bezüglich einer Dichtungsöffnung (5) innenliegend und/oder außenliegend an der Dichtung (4) eine Vielzahl von abschnittsweise ausgebildeten, spiralförmigen Ausnehmungen (10, 12) ausgeformt ist, die sich als solche von der zweiten Stirnseite (S_{II}) in einer Längsrichtung (X - X) sowie in einer Umfangsrichtung der Dichtung (4) erstrecken und dadurch zumindest dem der zweiten Stirnseite (S_{II}) zugewandten Ende der Dichtung (4), aus dem sie entspringen, eine derartig elastische Verformbarkeit verleihen, so dass die Dichtung (4) durch den Ventilkörper (6), mit dem die Dichtung (4) zusammen wirkt, zur Abdichtung eines Anschlussbereiches des Fluidventils (2) elastisch verformbar ist.

2. Fluidventil (2) nach Anspruch 1, wobei sich die einzelnen spiralförmigen Ausnehmungen (10, 12) in dieselbe Richtung erstrecken.

3. Fluidventil (2) nach Anspruch 1 oder 2, wobei die einzelnen spiralförmigen Ausnehmungen (10, 12) identisch ausgebildet sind.

4. Fluidventil (2) nach einem der Ansprüche 1 bis 3, wobei die einzelnen spiralförmigen Ausnehmungen (10, 12) gleichmäßig zueinander beabstandet sind.

5. Fluidventil (2) nach einem der vorhergehenden Ansprüche, wobei die erste Stirnseite (S_{I}) der Dichtung (4) gegenüber der Längsrichtung (X - X) der Dichtung (4), korrespondierend zur Formgebung des Ventilkörpers (6) schräg gestellt ist.

6. Fluidventil (2) nach Anspruch 5, wobei die erste Stirnseite (S_{I}) mit der Längsrichtung (X - X) einen Winkel von etwa 45° bis 75° einschließt.

7. Fluidventil (2) nach einem der vorhergehenden Ansprüche, wobei sich die einzelnen spiralförmigen Ausnehmungen (10, 12) bis in einen Bereich der ersten Stirnseite (S_{I}) erstrecken.

8. Fluidventil (2) nach einem der vorhergehenden Ansprüche, wobei die Dichtung (4) kreisringförmig oder zumindest im Wesentlichen kreisringförmig ausgebildet ist.

9. Fluidventil (2) nach einem der vorhergehenden Ansprüche, wobei die Dichtung (4) aus einem Kunststoff gespritzt ist.

10. Fluidventil (2) nach Anspruch 9, wobei die Dichtung (4) aus einem Hart-Kunststoff gespritzt ist.

11. Fluidventil (2) nach Anspruch 9, wobei die Dichtung (4) mit einem Hart-Kunststoff kombiniert ist.

12. Fluidventil (2) nach Anspruch 10 oder 11, wobei der Hart-Kunststoff ein PTFE-Kunststoff ist.

13. Fluidventil (2) nach einem der vorhergehenden Ansprüche, wobei das Fluidventil (2) in Gestalt eines Mehrwege-Ventils ausgebildet ist.

14. Verwendung eines Fluidventils (2) nach einem der vorhergehenden Ansprüche, wobei das Fluidventil (2) als Kühlwasserventil ausgebildet ist.

15. Verwendung nach Anspruch 14, wobei das Fluidventil (2) als Kühlwasserventil eines Fahrzeugs verwendet wird.

## Claims

1. Fluid valve (2), comprising:
a valve housing (8),
an actuatable valve body (6) within the valve housing (8), and
at least one elastically deformable seal (4),
wherein the seal (4) has a first end side (S_{I}) for sealing contact against the valve body (6) and
a second end side (S_{II}) for sealing contact against the valve housing (8),
**characterized in that**,
on the seal (4), at the inside and/or at the outside with respect to a seal opening (5), there is formed a multiplicity of spiral-shaped recesses (10, 12) which are formed in certain portions and which extend as such from the second end side (S_{II}) in a longitudinal direction (X - X) and in a circumferential direction of the seal (4) and thus provide at least that end of the seal (4) which faces toward the second end side (S_{II}) and from which they originate with such elastic deformability that the seal (4) is elastically deformable by the valve body (6), with which the seal (4) interacts, in order to seal off a connection region of the fluid valve (2).

2. Fluid valve (2) according to Claim 1, wherein the individual spiral-shaped recesses (10, 12) extend in the same direction.

3. Fluid valve (2) according to Claim 1 or 2, wherein the individual spiral-shaped recesses (10, 12) are of identical form.

4. Fluid valve (2) according to any of Claims 1 to 3, wherein individual spiral-shaped recesses (10, 12) are uniformly spaced apart from one another.

5. Fluid valve (2) according to any of the preceding claims, wherein the first end side (S_{I}) of the seal (4) is inclined relative to the longitudinal direction (X - X) of the seal (4) correspondingly to the shaping of the valve body (6).

6. Fluid valve (2) according to Claim 5, wherein the first end side (S_{I}) encloses an angle of approximately 45° to 75° with the longitudinal direction (X - X).

7. Fluid valve (2) according to any of the preceding claims, wherein the individual spiral-shaped recesses (10, 12) extend as far as into a region of the first end side (S_{I}).

8. Fluid valve (2) according to any of the preceding claims, wherein the seal (4) is of circular-ring-shaped or at least substantially circular-ring-shaped form.

9. Fluid valve (2) according to any of the preceding claims, wherein the seal (4) is injection-moulded from a plastic.

10. Fluid valve (2) according to Claim 9, wherein the seal (4) is injection-moulded from a hard plastic.

11. Fluid valve (2) according to Claim 9, wherein the seal (4) is combined with a hard plastic.

12. Fluid valve (2) according to Claim 10 or 11, wherein the hard plastic is a PTFE plastic.

13. Fluid valve (2) according to any of the preceding claims, wherein the fluid valve (2) is in the form of a multi-way valve.

14. Use of a fluid valve (2) according to any of the preceding claims, wherein the fluid valve (2) is in the form of a cooling-water valve.

15. Use according to Claim 14, wherein the fluid valve (2) is used as a cooling-water valve of a vehicle.

## Revendications

1. Soupape de fluide (2) comportant :
un carter de soupape (8),
un corps de soupape réglable (6) à l'intérieur du carter de soupape (8) et
au moins un joint d'étanchéité (4) déformable élastiquement, dans laquelle le joint d'étanchéité (4) comprend un premier côté frontal (S_{I}) destiné à s'appuyer de manière étanche contre le corps de soupape (6) et
un deuxième côté frontal (S_{II}) destiné à s'appuyer de manière étanche contre le carter de soupape (8),
**caractérisé en ce**
**qu'**une pluralité d'évidements (10, 12) en forme de spirale réalisés dans certaines parties sont formés de manière interne et/ou externe sur le joint d'étanchéité (4) par rapport à une ouverture de joint d'étanchéité (5), lesquels évidements s'étendent en tant que tels à partir du deuxième côté frontal (S_{II}) dans une direction longitudinale (X - X) ainsi que dans une direction périphérique du joint d'étanchéité (4) et confèrent ainsi une déformabilité élastique à l'extrémité du joint d'étanchéité (4) tournée vers le deuxième côté frontal (S_{II}), extrémité d'où ils proviennent, de telle sorte que le joint d'étanchéité (4) peut être déformé élastiquement par le corps de soupape (6), avec lequel le joint d'étanchéité (4) coopère, pour réaliser l'étanchéité d'une région de raccordement de la soupape de fluide (2).

2. Soupape de fluide (2) selon la revendication 1, dans laquelle les évidements (10, 12) en forme de spirale individuels s'étendent dans la même direction.

3. Soupape de fluide (2) selon la revendication 1 ou 2, dans laquelle les évidements (10, 12) en forme de spirale individuels sont réalisés de manière identique.

4. Soupape de fluide (2) selon l'une des revendications 1 à 3, dans laquelle les évidements (10, 12) en forme de spirale individuels sont espacés uniformément les uns des autres.

5. Soupape de fluide (2) selon l'une des revendications précédentes, dans laquelle le premier côté frontal (S_{I}) du joint d'étanchéité (4) est disposé de manière oblique par rapport à la direction longitudinale (X - X) du joint d'étanchéité (4), de manière correspondante à la forme du corps de soupape (6).

6. Soupape de fluide (2) selon la revendication 5, dans laquelle le premier côté frontal (S_{I}) forme avec la direction longitudinale (X - X) un angle d'approximativement 45° à 75°.

7. Soupape de fluide (2) selon l'une des revendications précédentes, dans laquelle les évidements (10, 12) en forme de spirale individuels s'étendent jusque dans une région du premier côté frontal (S_{I}).

8. Soupape de fluide (2) selon l'une des revendications précédentes, dans laquelle le joint d'étanchéité (4) est réalisé en forme d'anneau circulaire ou au moins sensiblement en forme d'anneau circulaire.

9. Soupape de fluide (2) selon l'une des revendications précédentes, dans laquelle le joint d'étanchéité (4) est moulé par injection à partir d'une matière synthétique.

10. Soupape de fluide (2) selon la revendication 9, dans laquelle le joint d'étanchéité (4) est moulé par injection à partir d'une matière synthétique dure.

11. Soupape de fluide (2) selon la revendication 9, dans laquelle le joint d'étanchéité (4) est combiné avec une matière synthétique dure.

12. Soupape de fluide (2) selon la revendication 10 ou 11, dans laquelle la matière synthétique dure est une matière synthétique en PTFE.

13. Soupape de fluide (2) selon l'une des revendications précédentes, la soupape de fluide (2) étant réalisée sous la forme d'une soupape à plusieurs voies.

14. Utilisation d'une soupape de fluide (2) selon l'une des revendications précédentes, dans laquelle la soupape de fluide (2) est réalisée en tant que soupape de refroidissement d'eau.

15. Utilisation selon la revendication 14, dans laquelle la soupape de fluide (2) est utilisée en tant que soupape de refroidissement d'eau d'un véhicule.
